# EUROPÄISCHE PATENTANMELDUNG

(11) **EP 2 639 599 A2**
(43) Veröffentlichungstag der Anmeldung: **18.09.2013**
(21) Anmeldenummer: 13158962.4
(22) Anmeldetag: 13.03.2013
(51) Int. Cl.: G01V 1/30

(54) **Verfahren zur Prognose petrophysikalischer Daten**

(30) Priorität: 13.03.2012 AT 500762012
(71) Anmelder: Akhverdiev, Allakhverdi, 8700 Leoben (AT)
(72) Erfinder: Akhverdiev, Allakhverdi, 8700 Leoben (AT)
(74) Vertreter: Wirnsberger, Gernot

(57) **Zusammenfassung**

Die Erfindung betrifft ein Verfahren zur Prognose petrophysikalischer Daten. Erfindungsgemäß ist vorgesehen, dass seismische Daten und petrophysikalische Daten an einer ersten Position gemessen werden und zumindest eine Korrelation der seismischen Daten zu petrophysikalischen Daten oder eine Korrelation von Kombinationen der seismischen Daten zu petrophysikalischen Daten ermittelt wird und an einer zweiten Position seismische Daten gemessen werden und aufgrund der Korrelation auf die petrophysikalischen Daten der zweiten Position geschlossen wird.

## Beschreibung

Die Erfindung betrifft ein Verfahren zur Prognose petrophysikalischer Daten.

Aus dem Stand der Technik sind mehrere Verfahren bekannt geworden, um petrophysikalische Daten zu prognostizieren.

So ist es bekannt, seismische Messungen durchzuführen, und anhand allgemein bekannter Zusammenhänge auf einen geologischen Schichtaufbau und insbesondere ein Vorkommen an Bodenschätzen bzw. Rohstoffen zu schließen. Es hat sich jedoch gezeigt, dass allgemeine Zusammenhänge in Verbindung mit seismischen Messungen nur zu einer unbefriedigenden Prognosequalität führen, weswegen beispielsweise bei einer Rohölaufsuchung zumeist trotz seismischer Prognosen zahlreiche Bohrungen durchgeführt werden müssen, um auf ÖI zu stoßen.

Aufgabe der Erfindung ist es, ein Verfahren der eingangs genannten Art anzugeben, welches gegenüber den Verfahren des Standes der Technik eine verbesserte Prognosequalität liefert.

Die Aufgabe wird erfindungsgemäß dadurch gelöst, dass bei einem Verfahren der eingangs genannten Art seismische Daten und petrophysikalische Daten an einer ersten Position gemessen werden und zumindest eine Korrelation der seismischen Daten zu petrophysikalischen Daten oder eine Korrelation von Kombinationen der seismischen Daten zu petrophysikalischen Daten ermittelt wird und an einer zweiten Position seismische Daten gemessen werden und aufgrund der Korrelation auf die petrophysikalischen Daten der zweiten Position geschlossen wird.

Der Erfinder hat erkannt, dass eine Prognose petrophysikalischer Daten, insbesondere eines geologischen Schichtaufbaus, aufgrund von allgemeinen Zusammenhängen mit seismischen Daten deshalb nicht regelmäßig zum Erfolg führt, weil Ergebnisse seismischer Messungen nicht für jedes Gebiet gleich zu interpretieren sind. So hängt es wesentlich von einem Schichtaufbau der geologischen Region ab, welche seismischen Messwerte beispielsweise eine Schicht, bestehend aus Sand oder Schiefer, oder ein Erdölvorkommen anzeigen. Erfindungsgemäß werden dazu petrophysikalische Messwerte beispielsweise durch eine Bohrung ermittelt und mit seismischen Messwerten gegenübergestellt. Die petrophysikalischen Messwerte können dabei beispielsweise über eine Leistungsaufnahme eines Bohrers oder eine Analyse von gefördertem Material ermittelt werden. Weiter können petrophysikalische Daten auch durch eine Messung von Gammastrahlen oder akustischen Daten, insbesondere einer akustischen Impedanz, in unterschiedlichen Tiefen ermittelt werden, wie dies aus dem Stand der Technik bekannt ist. Dabei können einerseits stratigrafische Daten ermittelt werden, mit denen ein geologisches Alter einzelner Gesteinsschichten bestimmbar ist. Andererseits können auch lithologische Daten einzelner Gesteinsschichten erhoben werden, mit denen Gesteinsarten verschiedener Tiefen ermittelt werden. Sowohl lithologische als auch stratigrafische Daten sind häufig verwendete petrophysikalische Daten, um ein Gebiet geologisch zu beschreiben und Rohstoffe wie Erdöl aufzufinden. Seismische Messwerte werden bevorzugt mit bekannten Verfahren des Standes der Technik ermittelt, beispielsweise mittels Refraktionsseismik oder Reflexionsseismik, wobei seismische Wellen ausgesandt und an Gesteinsschichten reflektiert werden. Bevorzugt über eine Laufzeitmessung der Wellen wird eine Tiefe der Schicht, von welcher die seismischen Wellen reflektiert werden, ermittelt, sodass gemessene seismische Daten verschiedenen Tiefen zugeordnet werden können. Anschließend werden die ermittelten Daten bevorzugt statistisch analysiert, um zu evaluieren, welche seismischen Daten mit geologischen Schichten, insbesondere Fazies bzw. Lithofazies sowie stratigrafischen Formationen, die aus den petrophysikalischen Daten bestimmt werden, korrelieren. Darüber hinaus wird auch analysiert, welche Änderungen, insbesondere Ableitungen, von seismischen Daten auf geologische Schichten oder Trennschichten zwischen geologischen Schichten hindeuten. Dazu werden die seismischen Daten über verschiedene Tiefen mit gemessenen petrophysikalischen Daten der entsprechenden Tiefen gegenübergestellt und Zusammenhänge mit bekannten mathematischen Methoden oder grafisch ermittelt. Hierzu kann vorgesehen sein, dass die seismischen Daten mathematisch manipuliert werden. Beispielsweise kann es vorteilhaft sein, Kombinationen von einzelnen seismischen Daten zu bilden, also einzelne Daten mathematisch miteinander zu kombinieren, insbesondere ein Produkt oder einen Quotient von mehreren Daten zu bilden, um bessere Korrelationen zu finden. Auch kann es zielführend sein, eine oder mehrere Ableitungen der ermittelten Daten über die gemessene Tiefe oder die Zeit zu bilden. Eine auf diese Weise ermittelte Korrelation zwischen seismischen und petrophysikalischen Daten kann bessere Prognosedaten für die zweite Position liefern als Zusammenhänge, die beispielsweise aus der Literatur bekannt sind, insbesondere da die seismischen Messmethoden auf tatsächliche petrophysikalische Gegebenheiten abgestimmt sind. So können beispielsweise systematische Fehler zwischen Korrelationen der Literatur und tatsächlichen Messungen aufgrund falsch eingestellter Messinstrumente ausgeschlossen werden.

Die im erfindungsgemäßen Verfahren ermittelten petrophysikalischen Daten bilden insbesondere eine Prognose für Rohstoffvorkommen. Aufgrund der Prognose ist eine effizientere Aufsuchung von Bodenschätzen, insbesondere Rohöl, möglich, da Positionen identifiziert werden können, die eine erhöhte Wahrscheinlichkeit für ein Auftreten von Bodenschätzen, insbesondere Rohöl, aufweisen. Für eine verbesserte Rohölaufsuchung ist es daher vorteilhaft, wenn das erfindungsgemäße Verfahren an mehreren Positionen durchgeführt wird, für welche Prognosen erstellt werden, wonach an jenen Positionen Bohrungen durchgeführt werden, an welchen die jeweilige Prognose eine erhöhte Wahrscheinlichkeit für ein Auftreten von Rohstoffen, insbesondere Erdöl, zeigt. Dazu kann vorgesehen sein, dass an jenen Positionen Bohrungen durchgeführt werden, an welchen eine durch die Prognose ermittelte Wahrscheinlichkeit für ein Auftreten eines gesuchten Rohstoffes über einem definierten Grenzwert liegt.

Bevorzugt ist die zweite Position geologisch der ersten Position ähnlich. Dadurch wird es besonders einfach, die ermittelten Korrelationen zu übertragen und die Prognosequalität erhöht.

Zweckmäßigerweise ist die zweite Position weniger als 10 km, insbesondere weniger als 5 km, bevorzugt weniger als 1 km, von der ersten Position entfernt. Dadurch ist eine besonders hohe Ähnlichkeit der Positionen in geologischer Hinsicht gegeben, wodurch die Prognosequalität steigt.

Vorteilhaft ist es, wenn die zweite Position an die erste Position angrenzt. Dadurch wird eine optimale geologische Übereinstimmung erreicht und die ermittelten Korrelationen der ersten Position können besonders gut auf die zweite Position angewandt werden.

Es hat sich bewährt, dass seismische Wellen ausgesandt und an Trennschichten von geologischen Schichten reflektiert werden und für verschiedene Tiefen der ersten Position und/oder der zweiten Position Amplitude und Frequenz der reflektierten Wellen ermittelt werden. Eine reflektierte Amplitude sowie eine Frequenz bzw. eine Frequenzverschiebung aufgrund von petrophysikalischen Gegebenheiten haben sich als besonders aussagekräftige seismische Daten erwiesen, um Prognosen zu bilden. Eine Frequenzverschiebung wird beispielsweise aus einer Differenz von ausgesandter und gemessener reflektierter Frequenz der seismischen Wellen ermittelt.

Zweckmäßigerweise ist vorgesehen, dass ein Quotient von Amplitude und Frequenz für verschiedene Tiefen der ersten Position und/oder der zweiten Position ermittelt wird. Da sich gezeigt hat, dass dieser Quotient besonders häufig gute Korrelationen mit petrophysikalischen Schichten oder lithologischen Formationen aufweist, hat sich die Verwendung des Quotienten für die Prognose als vorteilhaft erwiesen. So kann häufig lediglich über eine Analyse des Quotienten von Amplitude und Frequenz eine gute Prognose erstellt werden.

Mit Vorteil wird ein Produkt aus Amplitude und Frequenz für verschiedene Tiefen der ersten Position und/oder der zweiten Position ermittelt. Weil eine Frequenz häufig mit einer Gesteinsart korreliert und eine Amplitude Aufschluss über ein Reflexionsvermögen der einzelnen Schichten gibt, kann mit dem Produkt der beiden Werte für verschiedene Tiefen häufig bereits eine gute Korrelation festgestellt und eine Prognose für einen petrophysikalischen Aufbau an der zweiten Position gegeben werden.

Bevorzugt werden Gammastrahlen in verschiedenen Tiefen der ersten Position ermittelt. Gammastrahlen werden bereits zur Beurteilung von petrophysikalischen Schichten verwendet. Dabei wird eine natürliche Gammastrahlung in verschiedenen Tiefen des Bohrloches mittels Sensoren gemessen. Eine Messung der Gammastrahlen hat sich zur Charakterisierung und in Verbindung mit dem erfindungsgemäßen Verfahren auch zur Prognose von petrophysikalischen Gegebenheiten als günstig erwiesen.

Üblicherweise wird bei petrophysikalischen Messungen bevorzugt eine akustische Impedanz in verschiedenen Tiefen der ersten Position gemessen. Auch dieses Verfahren des Standes der Technik, bei dem bevorzugt akustische Emissionssonden in Bohrlöchern verwendet werden, hat sich in Kombination mit dem erfindungsgemäßen Verfahren als vorteilhaft erwiesen, um eine Prognosegenauigkeit zu erhöhen.

Mit Vorteil wird eine Bohrung oder Grabung an der ersten Position durchgeführt, wobei ein petrophysikalischer Schichtaufbau der ersten Position ermittelt wird. Beispielsweise kann über Daten des Bohrers, wie eine Leistungsaufnahme, eine Aussage über den petrophysikalischen Aufbau, insbesondere eine Gesteinsart, getroffen werden.

Vorteilhaft ist es, wenn der petrophysikalische Schichtaufbau aus dem bei der Bohrung oder Grabung geförderten Material ermittelt wird. Mit einer Analyse von gewonnenem Material kann ein Schichtaufbau besonders gut ermittelt werden.

Zweckmäßigerweise wird ein geologisches Alter von Schichten der ersten Position bestimmt. Diese Informationen geben Aufschluss über Gesteinszusammensetzungen. Mit diesen Informationen kann die Prognosequalität weiter verbessert werden.

Es ist von Vorteil, wenn geologische, insbesondere petrophysikalische Eigenschaften einzelner Schichten der ersten Position ermittelt werden. Je genauer eine Auflösung der petrophysikalischen Daten der ersten Position über die Tiefe ist, umso besser können Prognosen über den petrophysikalischen Aufbau der zweiten Position getroffen werden.

Um besonders schnell Ergebnisse zu erhalten, wird die Korrelation von seismischen Daten mit petrophysikalischen Daten in einem computerimplementierten Verfahren ermittelt. Zwar ist eine Auswertung auch manuell, ohne Computer, bzw. mittels grafischer Visualisierungen oder Diagrammen möglich; um große Datenmengen effizient zu verarbeiten, hat sich allerdings die Verwendung eines Computers als vorteilhaft erwiesen. Es können dabei gängige Statistikprogramme verwendet werden. Alternativ können die Daten auch in einem Tabellenkalkulationsprogramm analysiert werden, um Korrelationen zu ermitteln.

Zweckmäßigerweise werden in einem computerimplementierten Verfahren mittels der gefundenen Korrelationen und gemessener seismischer Daten der zweiten Position petrophysikalische Daten der zweiten Position für verschiedene Tiefen ermittelt. Besonders gefundene Korrelationen aus dem Quotienten oder dem Produkt von Amplitude und Frequenz mit einzelnen petrophysikalischen Schichten haben sich in diesem Zusammenhang als günstig erwiesen, um einen Aufbau der zweiten Position zu prognostizieren.

Zur grafischen Analyse und besseren Darstellung hat es sich als günstig erwiesen, dass seismische und petrophysikalische Daten zur Veranschaulichung in einem Diagramm dargestellt werden. So können noch ohne statistische Auswertungen schnell Aussagen über Korrelationen getroffen werden. Es hat sich zur grafischen Auswertung bewährt, den Quotienten von Amplitude und Frequenz mit gemessenen Gammastrahlen, einer gemessenen akustischen Impedanz sowie einem Lithologiekoeffizienten, der eine Gesteinsart beschreibt, gegenüberzustellen. In einem derartigen Diagramm werden bevorzugt seismische und petrophysikalische Daten gleicher Tiefen zu einem Datenpunkt zusammengefasst, sodass Korrelationen unabhängig von der Tiefe erkennbar sind.

Mit Vorteil wird die Korrelation des Quotienten von Amplitude und Frequenz zu einer petrophysikalischen Eigenschaft, insbesondere einer Gesteinsart, ermittelt. Je nach Region können auch andere Zusammenhänge, etwa eine Korrelation seismischer Daten mit einer Gesteinsporosität oder einer Festigkeit des Materials zweckmäßig sein. Gesteinsarten, wie beispielsweise Sand oder Schiefer geben häufig Aufschluss über vorhandene Rohstoffvorkommen, insbesondere Rohöl.

Weitere Merkmale, Vorteile und Wirkungen der Erfindung ergeben sich anhand des nachfolgend dargestellten Ausführungsbeispiels. In den Zeichnungen, auf welche dabei Bezug genommen wird, zeigen:
Fig. 1 eine Gegenüberstellung ermittelter seismischer und petrophysikalischer Daten;
Fig. 2 bis Fig. 4 weitere Gegenüberstellungen ermittelter seismischer und petrophysikalischer Daten;
Fig. 5 ein prognostiziertes petrophysikalisches Modell einer geologischen Schicht.

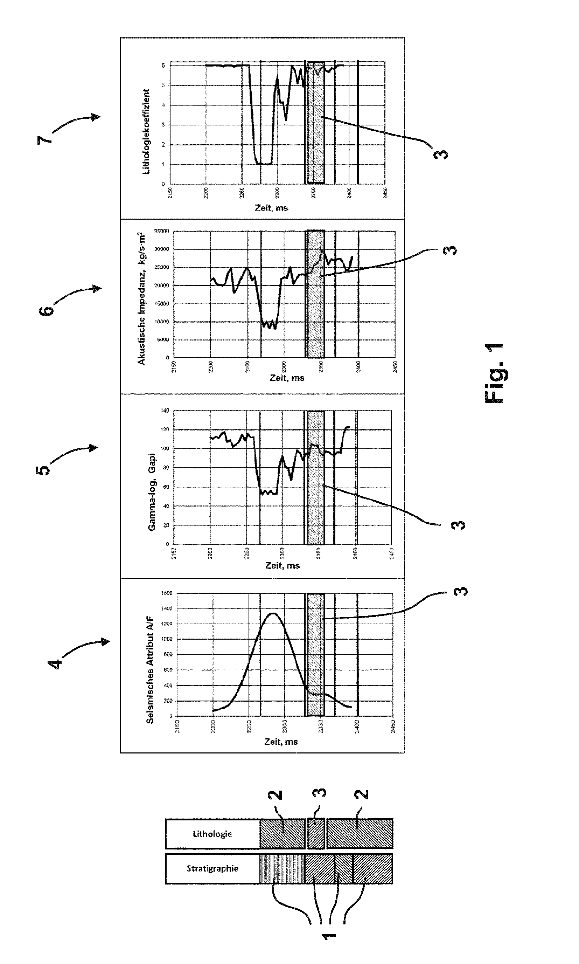

Fig. 1 zeigt eine Gegenüberstellung gemessener seismischer und petrophysikalischer Daten eines Bohrloches 8. In einem Seismikdiagramm 4 ist ein errechneter Quotient von Amplitude und Frequenz über verschiedene Tiefen aufgetragen. Amplitude und Frequenz werden in einem seismischen Messverfahren des Standes der Technik ermittelt und beispielsweise über eine Laufzeitmessung eine Tiefe einer Schicht ermittelt, von welcher eine seismische Welle reflektiert wird. An petrophysikalischen Daten sind in einem Gammadiagramm 5 gemessene Gammastrahlen, in einem Akustikdiagramm 6 gemessene akustische Impedanzen und in einem Lithologiediagramm 7 ein Lithologiekoeffizient, welcher die gemessenen Gesteinsarten angibt, jeweils für verschiedene Tiefen dargestellt. Bei dem Lithologiekoeffizient entspricht ein Wert von eins reinem Sand 3 und ein Wert von sechs reinem Schiefer 2. Werte dazwischen geben Mischformen an, bei denen sowohl Sand 3 als auch Schiefer 2 vorliegen. Diese petrophysikalischen Messwerte werden bei Bohrlochmessungen entsprechend bekannten Verfahren des Standes der Technik ermittelt. Darüber hinaus ist eine Stratigrafie sowie eine Lithologie von Gesteinsschichten in verschiedenen Tiefen dargestellt. Ersichtlich ist, dass im betrachteten Gestein vier verschiedene stratigrafische Formationen 1 vorhanden sind, die unterschiedlichen geologischen Alter der einzelnen Gesteinsschichten entsprechen. Eine lithologische Analyse zeigt, dass zwei unterschiedliche Gesteinsarten, Sand 3 und Schiefer 2, in einem Gebiet des Bohrloches 8 vorhanden sind. Ein Bereich, in welchem die Gesteinsart Sand 3 vorherrscht, ist in jedem der vier Diagramme markiert. Wie im Seismikdiagramm 4 ersichtlich, ist der Quotient von Amplitude und Frequenz abhängig von Formationen 1 sowie Gesteinsarten der jeweiligen Tiefe. Der Quotient von Amplitude und Frequenz hat sich als besonders aussagekräftig erwiesen, um geologische Eigenschaften eines Gesteins, sogenannte Fazies bzw. Lithofazies, zu beschreiben. Es kann allerdings auch zweckmäßig sein, ein Produkt aus Amplitude und Frequenz, eine Ableitung des Quotienten von Amplitude und Frequenz nach der Tiefe oder der Zeit, eine Ableitung des Produktes aus Amplitude und Frequenz nach der Tiefe oder der Zeit oder ein Produkt aus dem Quotienten von Amplitude und Frequenz und der Ableitung des vorstehenden Quotienten nach der Tiefe oder der Zeit zu verwenden, um eine Korrelation von seismischen Daten zu petrophysikalischen Daten zu erhalten.

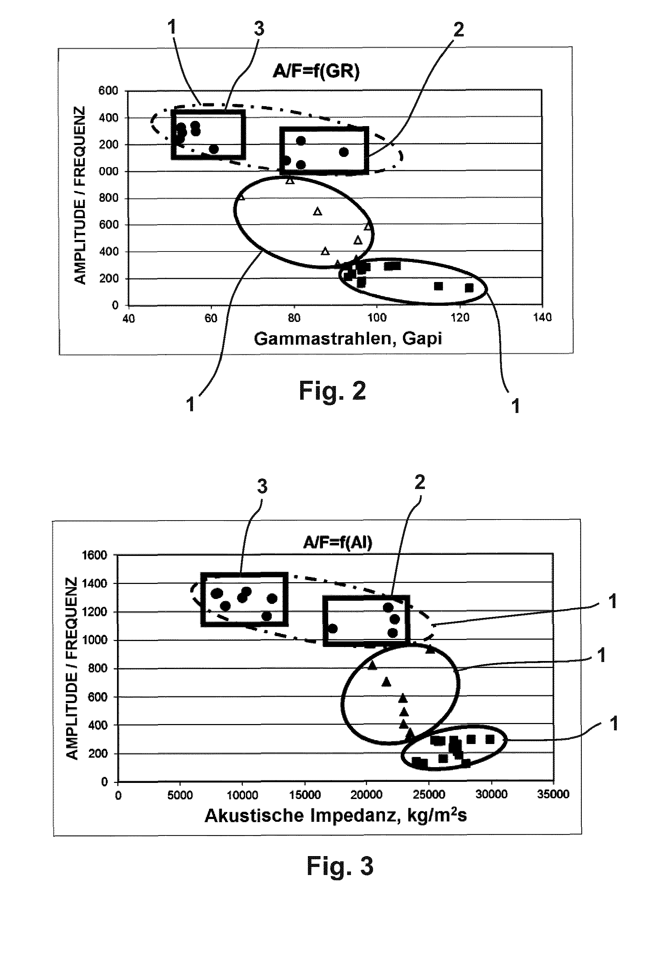

Fig. 2 zeigt eine grafische Gegenüberstellung von gemessenen Gammastrahlen mit dem Quotienten von Amplitude und Frequenz, wobei ein Punkt im Diagramm jeweils gemessenen Werten der gleichen Tiefe entspricht. Wie aus dem Diagramm ersichtlich, ist über die Höhe des Quotienten von Amplitude und Frequenz eine Klassifikation der Gesteinsschichten möglich, da der Quotient von Amplitude und Frequenz eine gute Korrelation mit den gemessenen Werten der Gammastrahlung zeigt. Diese Korrelation kann grafisch, durch eine Gegenüberstellung wie in Fig. 1, oder statistisch mit bekannten mathematischen Methoden, beispielsweise einer Regressionsanalyse, ermittelt werden. Mit der ermittelten Korrelation von seismischen Daten zu petrophysikalischen Daten kann so, wie im Diagramm in Fig. 2 eingetragen, eine Separation von einzelnen Formationen 1 sowie einzelner Gesteinsarten durchgeführt werden. Wie ersichtlich wurden die einzelnen Formationen 1 mit elliptischen Markierungen, die Gesteinsarten Sand 3 und Schiefer 2 mit eckigen Markierungen gekennzeichnet.

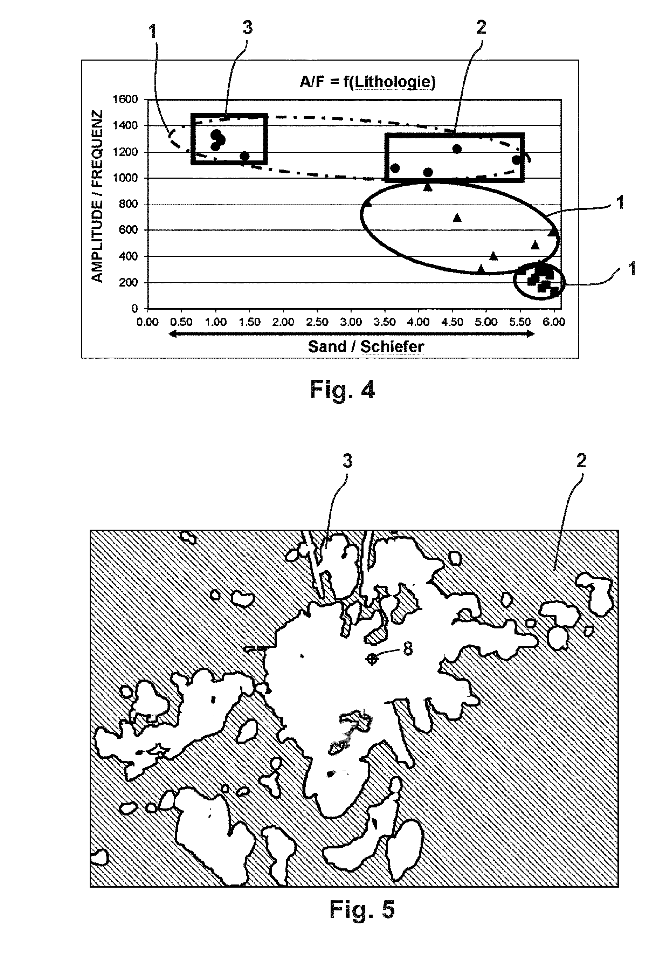

In Fig. 3 und Fig. 4 ist der Quotient von Amplitude und Frequenz der akustischen Impedanz und dem Lithologiekoeffizienten gegenübergestellt, wobei wieder jeder Punkt in den Diagrammen Messwerte der gleichen Tiefe darstellt. Auch in diesen Diagrammen zeigt sich, dass der Quotient von Amplitude und Frequenz gut mit petrophysikalischen Daten korreliert und eine Separation nach Formationen 1 und Gesteinsarten getroffen werden kann. Selbstverständlich können auch andere seismische Daten wie beispielsweise ein Produkt aus Amplitude und Frequenz oder eine Ableitung des Quotienten oder des Produktes für ein Bilden der Korrelation verwendet werden.

Fig. 5 zeigt einen prognostizierten Schichtaufbau eines Bodens in einer Tiefe, der mittels gefundener Korrelationen sowie seismischer Messungen gebildet wurde. Dabei ist Sand 3 sowie Schiefer 2 dargestellt. Weiter ist ein Bohrloch 8 an einer ersten Position dargestellt, an welchem petrophysikalische und seismische Daten ermittelt wurden, um die Korrelationen zwischen diesen Daten zu finden. An weiteren nicht eingezeichneten Positionen wurden lediglich seismische Werte gemessen. Mithilfe der gefundenen Korrelationen kann so für verschiedene Tiefen und an Positionen, an welchen keine petrophysikalischen Daten gemessen wurden, eine Gesteinszusammensetzung mit guter Qualität prognostiziert werden. Weil seismische Messwerte für verschiedene Tiefen vorliegen, kann mittels des erfindungsgemäßen Verfahrens für verschiedene Tiefen eine Prognose gebildet und eine dreidimensionale Darstellung der prognostizierten Gesteinszusammensetzung erstellt werden.

In einem Verfahren zur Prognose von Gesteinsschichten werden seismische und petrophysikalische Daten, wie in Fig. 1 beispielhaft dargestellt, an einer ersten Position, bevorzugt in einem Bohrloch 8, ermittelt und anschließend Korrelationen der seismischen Daten zu den petrophysikalischen Daten analysiert. Dies kann im Zuge einer grafischen Analyse, wie beispielsweise in einem Diagramm, wie in Fig. 2 bis Fig. 4 dargestellt, erfolgen. Eine weitere Möglichkeit, um Korrelationen zu finden, ist beispielsweise, die Daten mittels eines Statistikprogrammes auf einem Computer analysieren zu lassen. Selbstverständlich können die Korrelationen auch ohne Computer mittels bekannter mathematischer Verfahren gefunden werden. Um ein Auftreten einzelner Gesteinsschichten oder Formationen 1 an einer zweiten Position prognostizieren zu können, werden in weiterer Folge nur seismische Daten der zweiten Positionen gemessen. Im Anschluss werden die ermittelten Korrelationen auf die gemessenen seismischen Daten der zweiten Positionen angewandt, wobei die zweite Position bevorzugt geologisch der ersten Position ähnlich ist. In analoger Weise können petrophysikalische Daten für weitere Positionen prognostiziert werden. Dazu werden an den weiteren Positionen seismische Daten gemessen und die ermittelten Korrelationen der ersten Position auf diese Daten der weiteren Positionen angewandt. Daten von Bereichen zwischen der zweiten und den weiteren Positionen können über Interpolation für verschiedene Tiefen ermittelt werden. Bevorzugt sind dabei die zweite und die weiteren Positionen nahe der ersten Position, insbesondere in einer Entfernung von weniger als 10 km, insbesondere weniger als 5 km, besonders bevorzugt weniger als 1 km. Um die petrophysikalischen Daten der ersten Position besonders genau zu analysieren, können Daten wie Gammastrahlen in verschiedenen Tiefen, akustische Impedanz verschiedener Tiefen, Gesteinsproben verschiedener Tiefen sowie eine Leistungsaufnahme des Bohrers der verschiedenen Tiefen gemessen werden. Es hat sich als zweckmäßig erwiesen, den Quotienten von Amplitude und Frequenz der gemessenen seismischen Daten für eine Korrelationsbildung zu verwenden. Selbstverständlich kann es auch günstig sein, ein Produkt aus Amplitude und Frequenz zu bilden, sofern sich daraus bessere Korrelationen ergeben. Die Korrelation einzelner petrophysikalischer Daten zu seismischen Daten ist von einer geologischen Region abhängig, weswegen die Korrelationen für jedes Anwenden des Verfahrens in einer neuen Region bevorzugt neu ermittelt werden. So kann es auch vorteilhaft sein, eine Ableitung aus Amplitude und/oder Frequenz nach der Bohrtiefe oder der Zeit als Ausgangspunkt für das Bilden der Korrelation zu verwenden. Mit dem dargestellten Verfahren ist es möglich, mit wesentlich geringerem Aufwand als bei Verfahren des Standes der Technik petrophysikalische Daten wie Gesteinsschichten oder Formationen 1 mit hoher Genauigkeit zu prognostizieren. Mit mehreren Messpunkten für seismische Daten ist eine 3D-Darstellung der petrophysikalischen Gegebenheiten in einem Bereich um ein Bohrloch 8, bei welchem die petrophysikalischen Daten für die Korrelation ermittelt wurden, möglich.

## Patentansprüche

1. Verfahren zur Prognose petrophysikalischer Daten, **dadurch gekennzeichnet, dass** seismische Daten und petrophysikalische Daten an einer ersten Position gemessen werden und zumindest eine Korrelation der seismischen Daten zu petrophysikalischen Daten oder eine Korrelation von Kombinationen der seismischen Daten zu petrophysikalischen Daten ermittelt wird und an einer zweiten Position seismische Daten gemessen werden und aufgrund der Korrelation auf die petrophysikalischen Daten der zweiten Position geschlossen wird.

2. Verfahren nach Anspruch 1, **dadurch gekennzeichnet, dass** die zweite Position geologisch der ersten Position ähnlich ist.

3. Verfahren nach Anspruch 1 oder 2, **dadurch gekennzeichnet, dass** die zweite Position weniger als 10 km, insbesondere weniger als 5 km, bevorzugt weniger als 1 km, von der ersten Position entfernt ist.

4. Verfahren nach einem der Ansprüche 1 bis 3, **dadurch gekennzeichnet, dass** die zweite Position an die erste Position angrenzt.

5. Verfahren nach einem der Ansprüche 1 bis 4, **dadurch gekennzeichnet, dass** seismische Wellen ausgesandt und an Trennschichten von geologischen Schichten reflektiert werden und für verschiedene Tiefen der ersten Position und/oder der zweiten Position Amplitude und Frequenz der reflektierten Wellen ermittelt werden.

6. Verfahren nach Anspruch 5, **dadurch gekennzeichnet, dass** ein Quotient von Amplitude und Frequenz für verschiedene Tiefen der ersten Position und/oder der zweiten Position ermittelt wird.

7. Verfahren nach Anspruch 5, **dadurch gekennzeichnet, dass** ein Produkt aus Amplitude und Frequenz für verschiedene Tiefen der ersten Position und/oder der zweiten Position ermittelt wird.

8. Verfahren nach einem der Ansprüche 1 bis 7, **dadurch gekennzeichnet, dass** Gammastrahlen in verschiedenen Tiefen der ersten Position ermittelt werden.

9. Verfahren nach einem der Ansprüche 1 bis 8, **dadurch gekennzeichnet, dass** eine akustische Impedanz in verschiedenen Tiefen der ersten Position gemessen wird.

10. Verfahren nach einem der Ansprüche 1 bis 9, **dadurch gekennzeichnet, dass** eine Bohrung oder Grabung an der ersten Position durchgeführt wird, wobei ein petrophysikalischer Schichtaufbau der ersten Position ermittelt wird.

11. Verfahren nach Anspruch 10, **dadurch gekennzeichnet, dass** der petrophysikalische Schichtaufbau aus dem bei der Bohrung oder Grabung geförderten Material ermittelt wird.

12. Verfahren nach einem der Ansprüche 1 bis 11, **dadurch gekennzeichnet, dass** ein geologisches Alter von Formationen (1) der ersten Position bestimmt wird.

13. Verfahren nach einem der Ansprüche 1 bis 12, **dadurch gekennzeichnet, dass** geologische, insbesondere petrophysikalische Eigenschaften einzelner Schichten der ersten Position ermittelt werden.

14. Verfahren nach einem der Ansprüche 1 bis 13, **dadurch gekennzeichnet, dass** die Korrelation von seismischen Daten mit petrophysikalischen Daten in einem computerimplementierten Verfahren ermittelt wird.

15. Verfahren nach einem der Ansprüche 1 bis 14, **dadurch gekennzeichnet, dass** in einem computerimplementierten Verfahren mittels der gefundenen Korrelationen und gemessener seismischer Daten der zweiten Position petrophysikalische Daten der zweiten Position für verschiedene Tiefen ermittelt werden.

16. Verfahren nach einem der Ansprüche 1 bis 15, **dadurch gekennzeichnet, dass** seismische und petrophysikalische Daten zur Veranschaulichung in einem Diagramm dargestellt werden.

17. Verfahren nach einem der Ansprüche 1 bis 16, **dadurch gekennzeichnet, dass** die Korrelation des Quotienten von Amplitude und Frequenz zu einer petrophysikalischen Eigenschaft, insbesondere einer Gesteinsart, ermittelt wird.
